# EUROPEAN PATENT APPLICATION

(11) **EP 4 807 919 A1**
(43) Date of publication of application: **16.09.2026**
(21) Application number: 26152748.5
(22) Date of filing: 19.01.2026
(51) Int. Cl.: H01S 3/02, H01S 3/06, H01S 3/23, H01S 3/092, H01S 3/0941, H01S 3/04, H01S 3/16, H01S 3/17, H01S 3/042, H01S 3/067

(54) **COMPACT MULTIPLE PUMP CHAMBER MODULE**

(30) Priority: 20.01.2025 US 202563747236 P; 18.08.2025 US 202519302177
(71) Applicant: MegaWatt Lasers, Inc., Hilton Head Island SC 29928 (US)
(72) Inventor: Hamlin, Scott, Hilton Head Island 29928 (US); Hart, Benjamin, Hilton Head Island 29928 (US); Charpentier, Ashley, Hilton Head Island 29928 (US); Likins, Alexander, Hilton Head Island 29928 (US); Hardy, Christopher, Hilton Head Island 29928 (US)
(74) Representative: Swindell & Pearson Limited

(57) **Abstract**

Described herein are improved, compact multiple pump chamber modules, and methods for making same, where multiple pump chambers are contained in a single housing with the multiple pump chambers operating independently of one another.

## Description

### TECHNICAL FIELD

The subject matter disclosed herein is generally directed to improved, compact multiple pump chamber modules, and methods for making the same, where multiple pump chambers are contained in a single housing with the multiple pump chambers operating independently of one another.

### BACKGROUND

Current laser production arrangements have limitations, and improvement is needed to provide for increased functionality. Accordingly, it is an object of the present disclosure to provide separate pump chambers in a single compact housing. Combining multiple independent pump chambers in a single housing provides multiple benefits to laser designers. Since the pump chambers are completely independent, resonators using this module can operate at the same or different wavelengths, repetition rates, and the timing can be sequential, synchronous, or asynchronous.

Citation or identification of any document in this application is not an admission that such a document is available as prior art to the present disclosure.

### SUMMARY

The above objectives are accomplished according to the present disclosure by providing improved, compact multiple pump chamber modules, where multiple pump chambers are contained in a single housing with the multiple pump chambers operating independently of one another.

In a further embodiment, the current disclosure provides methods for making improved, compact multiple pump chamber modules, where multiple pump chambers are contained in a single housing with the multiple pump chambers operating independently of one another.

A further embodiment provides a multi-chamber flashlamp pumped laser system with independently operating pump chambers operating within a single housing. Further, the beams from each pump chamber in the system may be combined into a single path for use with laser sources and laser light including, but not limited to, solid state lasers, diode pumped lasers, semiconductor lasers, fiber lasers or any other laser that is obvious to an expert in the trade. Additionally, the system may include beam translation, or beam shifting, for use with laser sources and laser light including, but not limited to, solid state lasers, diode pumped lasers, semiconductor lasers, fiber lasers or any other laser that is within the skill of an expert in the trade. Further again, the system may be useful in laser medical devices. Further still, the system may include devices for use with Ho:YAG, Er:YAG, Nd:YAG, Er:Glass, Ruby, Alexandrite lasers, or other solid state laser media. Even further, the system may include combining devices for use in Urology and Endourology. Further yet, the system may include beam combining devices for use in Lithotripsy or Benign Prostate Hyperplasia treatments. Still yet again, the system may comprise beam combining with multiple wavelengths. Moreover, the system may comprise devices for use in telecommunications. Still again, the system may comprise devices for use in laser material processing. Yet still further, the system may comprise beam combining devices for use in laser peening, drilling and/or welding.

These and other aspects, objects, features, and advantages of the example embodiments will become apparent to those having ordinary skill in the art upon consideration of the following detailed description of example embodiments.

### BRIEF DESCRIPTION OF THE DRAWINGS

An understanding of the features and advantages of the present disclosure will be obtained by reference to the following detailed description that sets forth illustrative embodiments, in which the principles of the disclosure may be utilized, and the accompanying drawings of which:
**FIG. 1** shows an example of a typical solid-state laser pump chamber as prior art.
**FIGS. 2A** **and** **2B** show a current pump chamber design specifically calling out the rod and flashlamp proximity
**FIGS. 3A** **and** **3B** show a dual pump chamber design
**FIGS. 4A** **and** **4B** show an embodiment of this disclosure containing four pump chambers in a single housing.
**FIG. 5** shows beams from closely spaced resonators being launched into a single multimode fiberoptic.
**FIG. 6** shows beams from closely spaced resonators translated to tightly spaced parallel adjacent beams.
**FIG. 7** shows an embodiment of this disclosure with a single housing Master Oscillator Power Amplifier (MOPA) configuration
**FIG. 8** shows an embodiment of this disclosure with a single housing differing wavelength beam combiner.
**FIGS. 9A** **and** **9B** show an embodiment of this disclosure with differing layout and quantities of pump chambers within a single housing

The figures herein are for illustrative purposes only and are not necessarily drawn to scale.

### DETAILED DESCRIPTION OF THE EXAMPLE EMBODIMENTS

Before the present disclosure is described in greater detail, it is to be understood that this disclosure is not limited to particular embodiments described, and as such may, of course, vary. It is also to be understood that the terminology used herein is for the purpose of describing particular embodiments only and is not intended to be limiting.

Unless specifically stated, terms and phrases used in this document, and variations thereof, unless otherwise expressly stated, should be construed as open ended as opposed to limiting. Likewise, a group of items linked with the conjunction "and" should not be read as requiring that each and every one of those items be present in the grouping but rather should be read as "and/or" unless expressly stated otherwise. Similarly, a group of items linked with the conjunction "or" should not be read as requiring mutual exclusivity among that group but rather should also be read as "and/or" unless expressly stated otherwise.

Furthermore, although items, elements or components of the disclosure may be described or claimed in the singular, the plural is contemplated to be within the scope thereof unless limitation to the singular is explicitly stated. The presence of broadening words and phrases such as "one or more," "at least," "but not limited to" or other like phrases in some instances shall not be read to mean that the narrower case is intended or required in instances where such broadening phrases may be absent.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, the preferred methods and materials are now described.

All publications and patents cited in this specification are cited to disclose and describe the methods and/or materials in connection with which the publications are cited. All such publications and patents are herein incorporated by references as if each individual publication or patent were specifically and individually indicated to be incorporated by reference. Such incorporation by reference is expressly limited to the methods and/or materials described in the cited publications and patents and does not extend to any lexicographical definitions from the cited publications and patents. Any lexicographical definition in the publications and patents cited that is not also expressly repeated in the instant application should not be treated as such and should not be read as defining any terms appearing in the accompanying claims. The citation of any publication is for its disclosure prior to the filing date and should not be construed as an admission that the present disclosure is not entitled to antedate such publication by virtue of prior disclosure. Further, the dates of publication provided could be different from the actual publication dates that may need to be independently confirmed.

As will be apparent to those of skill in the art upon reading this disclosure, each of the individual embodiments described and illustrated herein has discrete components and features which may be readily separated from or combined with the features of any of the other several embodiments without departing from the scope or spirit of the present disclosure. Any recited method can be carried out in the order of events recited or in any other order that is logically possible.

Where a range is expressed, a further embodiment includes from the one particular value and/or to the other particular value. The recitation of numerical ranges by endpoints includes all numbers and fractions subsumed within the respective ranges, as well as the recited endpoints. Where a range of values is provided, it is understood that each intervening value, to the tenth of the unit of the lower limit unless the context clearly dictates otherwise, between the upper and lower limit of that range and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure. For example, where the stated range includes one or both of the limits, ranges excluding either or both of those included limits are also included in the disclosure, e.g., the phrase "x to y" includes the range from 'x' to 'y' as well as the range greater than 'x' and less than 'y'. The range can also be expressed as an upper limit, e.g., 'about x, y, z, or less' and should be interpreted to include the specific ranges of 'about x', 'about y', and 'about z' as well as the ranges of 'less than x', less than y', and 'less than z'. Likewise, the phrase 'about x, y, z, or greater' should be interpreted to include the specific ranges of 'about x', 'about y', and 'about z' as well as the ranges of 'greater than x', greater than y', and 'greater than z'. In addition, the phrase "about 'x' to 'y'", where 'x' and 'y' are numerical values, includes "about 'x' to about 'y'".

It should be noted that ratios, concentrations, amounts, and other numerical data can be expressed herein in a range format. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. Ranges can be expressed herein as from "about" one particular value, and/or to "about" another particular value. Similarly, when values are expressed as approximations, by use of the antecedent "about," it will be understood that the particular value forms a further aspect. For example, if the value "about 10" is disclosed, then "10" is also disclosed.

It is to be understood that such a range format is used for convenience and brevity, and thus, should be interpreted in a flexible manner to include not only the numerical values explicitly recited as the limits of the range, but also to include all the individual numerical values or sub-ranges encompassed within that range as if each numerical value and sub-range is explicitly recited. To illustrate, a numerical range of "about 0.1% to 5%" should be interpreted to include not only the explicitly recited values of about 0.1% to about 5%, but also include individual values (e.g., about 1%, about 2%, about 3%, and about 4%) and the sub-ranges (e.g., about 0.5% to about 1.1%; about 5% to about 2.4%; about 0.5% to about 3.2%, and about 0.5% to about 4.4%, and other possible sub-ranges) within the indicated range.

As used herein, the singular forms "a", "an", and "the" include both singular and plural referents unless the context clearly dictates otherwise.

As used herein, "about," "approximately," "substantially," and the like, when used in connection with a measurable variable such as a parameter, an amount, a temporal duration, and the like, are meant to encompass variations of and from the specified value including those within experimental error (which can be determined by e.g., given data set, art accepted standard, and/or with e.g., a given confidence interval (e.g., 90%, 95%, or more confidence interval from the mean), such as variations of +/-10% or less, +/-5% or less, +/-1% or less, and +/-0.1 % or less of and from the specified value, insofar such variations are appropriate to perform in the disclosure. As used herein, the terms "about," "approximate," "at or about," and "substantially" can mean that the amount or value in question can be the exact value or a value that provides equivalent results or effects as recited in the claims or taught herein. That is, it is understood that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art such that equivalent results or effects are obtained. In some circumstances, the value that provides equivalent results or effects cannot be reasonably determined. In general, an amount, size, formulation, parameter or other quantity or characteristic is "about," "approximate," or "at or about" whether or not expressly stated to be such. It is understood that where "about," "approximate," or "at or about" is used before a quantitative value, the parameter also includes the specific quantitative value itself, unless specifically stated otherwise.

As used herein, "control" can refer to an alternative subject or sample used in an experiment for comparison purpose and included to minimize or distinguish the effect of variables other than an independent variable.

The term "optional" or "optionally" means that the subsequent described event, circumstance or substituent may or may not occur, and that the description includes instances where the event or circumstance occurs and instances where it does not.

As used interchangeably herein, the terms "sufficient" and "effective," can refer to an amount (e.g., mass, volume, dosage, concentration, and/or time period) needed to achieve one or more desired and/or stated result(s). For example, a therapeutically effective amount refers to an amount needed to achieve one or more therapeutic effects.

As used herein, "tangible medium of expression" refers to a medium that is physically tangible or accessible and is not a mere abstract thought or an unrecorded spoken word. "Tangible medium of expression" includes, but is not limited to, words on a cellulosic or plastic material, or data stored in a suitable computer readable memory form. The data can be stored on a unit device, such as a flash memory or CD-ROM or on a server that can be accessed by a user via, e.g., a web interface.

These further definitions are also provided:
Collimated Beam: a beam of light whose rays are essentially parallel and do not have high beam divergence.
CTH:YAG: Acronym for Chromium, Thulium, Holmium doped Yttrium Aluminum Garnet. CTH:YAG is often referred to as Ho:YAG.
Diffuse reflection: the reflection of light from a surface such that an incident ray is reflected at many angles, rather than at just one angle.
Diffuse reflector: a material that exhibits diffuse reflection. An ideal diffuse reflector has a Lambertian reflectance profile.
Beam Divergence: a measure for how fast a laser beam expands far from its focal point or beam waist.
Flashlamp: an electrical arc lamp which creates intense brief bursts of bright light. Used as a pump source for lasers.
High reflectivity mirror: a mirror that reflects a high percentage, typically 99% or more of the light back through the resonator.
Housing: Also pump chamber housing. The structure or device that holds the parts of the pump chamber(s) in place.
Lambertian reflectance: the property that defines an ideal "matte" or diffusely reflecting surface.
Laser: Light Amplification by Stimulated Emission of Radiation. A device that generates an intense beam of coherent monochromatic light (or other electromagnetic radiation) by stimulated emission of photons from excited atoms or molecules.
Laser diode: a semiconductor device similar to a light-emitting diode in which a diode pumped directly with electrical current can create lasing conditions at the diode's junction.
Laser medium: the source of optical gain within a laser.
Laser resonator: a chamber consisting of reflective surfaces and a laser amplification medium in which laser radiation can circulate and compensate optical power losses. Also called a laser cavity.
Laser rod: a gain media in the shape of a solid cylinder used in the generation of a laser beam.
MOPA: a master oscillator power amplifier (MOPA) is a laser system configuration consisting of a master laser which controls the frequency of the system and at least one amplifier which increases the output power.
Output Coupler: partially transparent laser mirror, used for extracting output beams from laser resonators.
Optical gain: a measure of the strength of optical amplification.
Prism: a piece of glass or other transparent material cut with precise angles and plane faces, useful for analyzing and reflecting light.
Pump Chamber: a part of a solid-state laser, used to direct the emission of the optical pump source into the laser gain media, often referred to as a pump cavity.
Pump Module: a single housing containing multiple pump chambers capable of independent operation.
Specular reflection: occurs with smooth surfaces which allow light rays to reflect at the same angle as they hit the surface
Specular reflector: a material that exhibits specular mirror-like reflection of waves
Pump source: the device which transfers energy from an external source into optical energy used to excite or optically pump the gain media, Examples include flashlamps, arc lamps, LEDs, semiconductor lasers, and other light sources.
Solid State Laser: a laser with a solid-state gain medium (usually ion-doped crystals or glasses).

Various embodiments are described hereinafter. It should be noted that the specific embodiments are not intended as an exhaustive description or as a limitation to the broader aspects discussed herein. One aspect described in conjunction with a particular embodiment is not necessarily limited to that embodiment and can be practiced with any other embodiment(s). Reference throughout this specification to "one embodiment", "an embodiment," "an example embodiment," means that a particular feature, structure or characteristic described in connection with the embodiment is included in at least one embodiment of the present disclosure. Thus, appearances of the phrases "in one embodiment," "in an embodiment," or "an example embodiment" in various places throughout this specification are not necessarily all referring to the same embodiment but may. Furthermore, the particular features, structures or characteristics may be combined in any suitable manner, as would be apparent to a person skilled in the art from this disclosure, in one or more embodiments. Furthermore, while some embodiments described herein include some, but not other features included in other embodiments, combinations of features of different embodiments are meant to be within the scope of the disclosure. For example, in the appended claims, any of the claimed embodiments can be used in any combination.

All patents, patent applications, published applications, and publications, databases, websites and other published materials cited herein are hereby incorporated by reference to the same extent as though each individual publication, published patent document, or patent application was specifically and individually indicated as being incorporated by reference.

### KITS

Any of the compact multiple pump chamber modules described herein can be presented as a combination kit. As used herein, the terms "combination kit" or "kit of parts" refers to the mechanical instruments and apparatus and any additional components that are used to package, sell, market, deliver, and/or provide the combination of elements or a single element, such as the compact multiple pump chamber modules contained therein. Such additional components include, but are not limited to, packaging, tools, assembly equipment and the like. When one or more of the mechanical instruments and apparatus and any additional components described herein or a combination thereof (e.g., instruments contained in the kit are provided simultaneously, the combination kit can contain the compact multiple pump chamber modules in a single embodiment or in separate embodiments. When mechanical instruments and apparatus and any additional components described herein or a combination thereof and/or kit components are not provided simultaneously, the combination kit can contain each component in separate embodiments. The separate kit components can be contained in a single package or in separate packages within the kit.

In some embodiments, the combination kit also includes instructions printed on or otherwise contained in a tangible medium of expression. The instructions can provide information regarding the mechanical instruments and apparatus and any additional components, safety information regarding the content of the mechanical instruments and apparatus and any additional components, information regarding assembly, use, and/or recommended maintenance regimen(s) for the mechanical instruments and apparatus and any additional components contained therein. In some embodiments, the instructions can provide directions and protocols for testing and experimental uses of the devices. In some embodiments, the instructions can provide one or more embodiments of the methods compact multiple pump chamber modules such as any of the methods described in greater detail elsewhere herein.

The current disclosure pertains to the use of a singular housing containing multiple independent pump chambers, which may be referred to as a Pump Module. This disclosure has application to a plurality of two or more pump chambers containing multiple pumped laser rods in which each laser rod may be run either simultaneously or non-simultaneously.

One of Applicant's main product lines is diffuse-reflector solid-state laser pump chambers. These pump chambers utilize a highly reflective Lambertian reflector that functions like an integrating sphere. Rather than use a mirrored surface to direct light into the laser rod, a diffuse reflector simply scatters the light in all directions. Light from the flashlamp is uniformly scattered inside the pump chamber akin to the function of an integrating sphere. This way, light passes multiple times through the laser rod at every angle, providing efficient and uniform optical pumping.

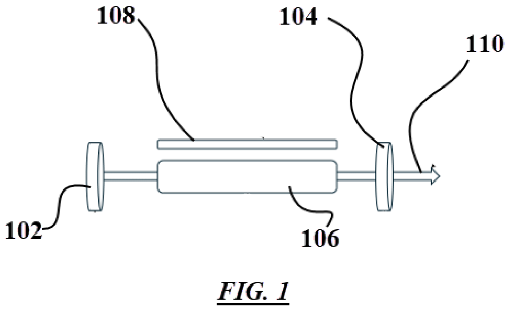

In a simple form, the optical resonator is composed of a gain media 106 placed between multiple resonator mirrors including a high reflectivity mirror 102 and output coupler 104, one of which is partially reflective (the output coupler 104). For solid-state lasers, the gain media is often optically pumped in a pump chamber. The pump chamber typically contains a light source such as a flashlamp 108 and laser gain media 106, which often is in the shape of a cylindrical rod. The pump chamber has some form of a reflector, typically specular or diffuse, to direct the light from the light source into the gain media. The laser output 110 is emitted from the output coupler. See FIG. 1.

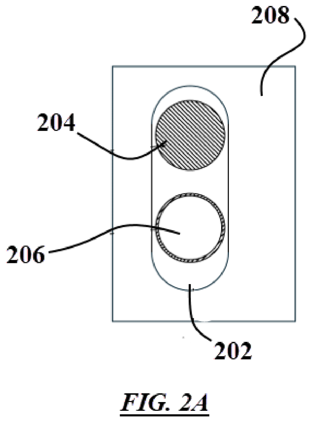

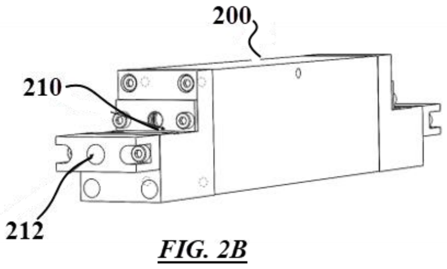

FIGS. 2A and 2B show images of a close-coupled diffuse-reflector pump chamber 200. This close coupling of the standard diffuse-reflector pump chamber is essential in that the spacing between pump source and gain media is minimized. FIG. 2A shows the pump chamber cross section with the laser rod 204 placed at the top of the flow tube 202. Flashlamp 206 is on the bottom and the diffuse reflector 208 surrounds both flashlamp 206 and laser rod 204. FIG. 2B shows a state-of-the-art diffuse reflector pump chamber 200 in a housing manufactured by MegaWatt Lasers. The laser rod is inserted in top or rod hole 210 and the flashlamp in the bottom or flashlamp hole 212.

Solid-state laser pump chambers typically contain one or more laser rods and one or more flashlamps. The most typical configuration is with a single flashlamp and single rod, although dual flashlamps, single rod configurations are also common. Many other configurations have been produced by MegaWatt Lasers and other manufacturers. Until this disclosure, all the flashlamps and laser rods were contained in the same reflector, thus operating dependently of one another. The essence of this disclosure is multiple pump chambers in a single housing with each pump chamber operating independently of the others.

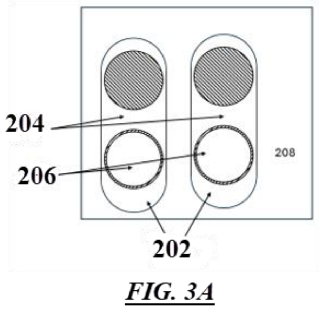

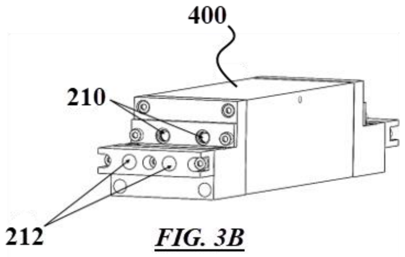

FIGS. 3A and 3B show a design of a D4X125 Dual Pump Chamber Module (Shark) 400. As shown in the cross-section view in FIG. 3A, the D4X125 (Shark) pump module contains two separate pump chambers in a single compact housing. Combining multiple independent pump chambers in a single housing provides multiple benefits to laser designers. Since the pump chambers are completely independent, resonators using this module can operate at the same or different wavelengths, repetition rates, and the timing can be sequential, synchronous, or asynchronous.

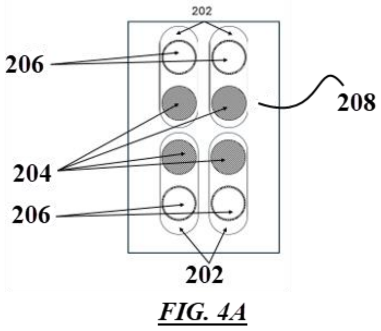

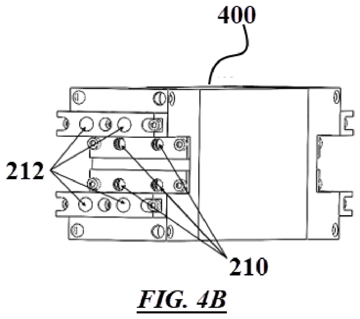

FIGS. 4A and 4B show a preferred embodiment of the current disclosure design. Metal housing 400 contains four (4) pump chambers with the ability to operate independently within a single housing. The pump chambers are oriented so that the rods are as close as possible, while still maximizing the internal area for the reflector, flashlamps, and flow tubes. The flow or filter tubes 202 may be composed of fused silica or glass, which may be doped or undoped. Dopants are small concentrations of ion(s) or substance(s) and typically is less than ten percent of the glass content. Examples of dopant ions include Ti, V, Cr, Co, Ni, Ce, Nd, Sm, Eu, Ho, Er, and other ions. The dopants are usually selected to filter light passing through the pump chamber flow or filter tube. This might be to block UV, IR, or other spectral regions to reduce heat applied to the laser gain media or to block amplified spontaneous emission. Because each of the pump chambers can operate independently, it is easy to have control over each resonator's repetition rate, pulse duration, and pulse energy. Additionally, the flow or filter tube in each resonator may be the same or might be different, depending upon each resonator's purpose. In this embodiment, the pump chambers are close together which allows for unique operating conditions with minimization of the number of elements needed in a system (i.e. separate housings, optics, etc.). This allocation of fewer elements allows for quicker and lower cost of assembly. FIG. 4A shows a cross section of the pump chamber and FIG. 4B shows a model of housing 400 of the current disclosure. Since the pump chambers are completely independent, resonators using this module can operate at the same or different wavelengths, repetition rates, and the timing can be simultaneous, sequential, synchronous, or asynchronous.

The closeness of the rods in the pump module makes this design ideal for beam combining. Having the size of the pump module minimized allows for a minimization of the mechanical design, thus making this module more accessible in industrial, military, and medical use.

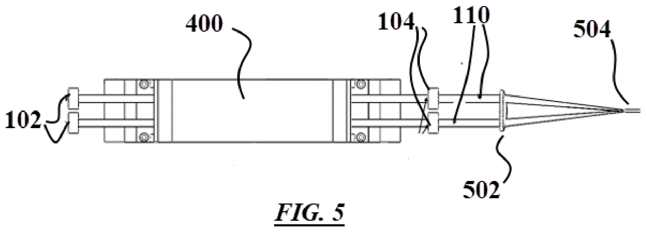

Another embodiment of the design is similar to the embodiment described above but could have any number of beams laser 110 which are launched into a fiber optic cable 504 via a focusing optic 502, see FIG. 5. By having the pump module designed so that the beams are optimally adjacent, it is possible to launch multiple beams into a single fiber optic without complicated optics. Having multiple chambers within a shared housing allows for the use of one optic rather than the multiple optics that would be necessary to translate the beam from multiple independently operated pump chambers within separate housings. FIG. 5 illustrates one possible embodiment and possible components.

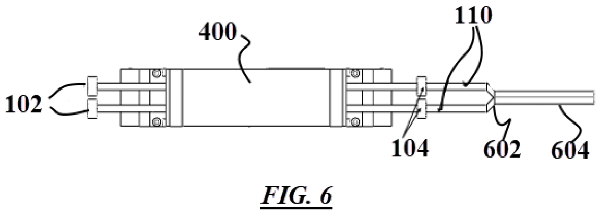

FIG. 6 shows a further embodiment of the current disclosure designed to use prisms, or other optics, to translate the beams so that they are adjacent to each other. Prisms 602 show the beams being combined along an adjacent parallel beam path 604. The prisms shown in FIG. 6 are rhomboid prisms, but any refractive, reflective, or diffractive optics could be used with this invention. This embodiment of the design depends on the parallelism of the beams exiting the pump module. While the optical setup for this embodiment can be reproduced with pump chambers in separated housings, the design of the pump module with multiple pump chambers inside of it allows for the closeness of the laser beams so that a smaller diameter, or numerical aperture fiber can be used. This embodiment would have an output beam size dependent upon the number of the pump chambers within the module where a higher number of pump chambers correlates with a larger beam diameter. The size can be varied by adding additional independent chambers to the housing. While FIG 6 shows the beams being placed adjacent to each other with two prisms, it could also be done with a single prism. Additionally, instead of prisms, other optics such as reflective mirrors could be used. For some applications, it is possible to have multiple beams that are adjacent and parallel to each other. At a distance sufficiently far from the resonators, the beam will appear to originate from a single source.

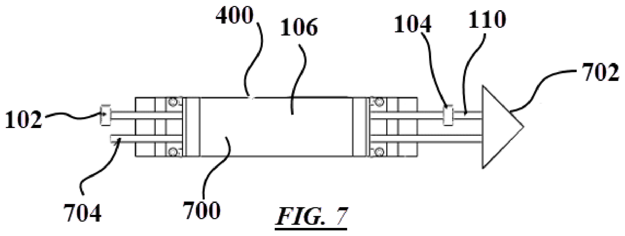

Since the pump chambers and resonators of the current disclosure are independent, they can operate very differently from commercially available multi rod pump chamber designs. In a Master Oscillator Power Amplifier (MOPA) configuration, see FIG. 7, each laser rod can be independently optimized for maximum performance. Currently many MOPAs are constructed using a single flashlamp dual rod pump chamber. Since there is only one flashlamp, performance is limited to optimizing only one of the laser rods. The embodiment with regards to this disclosure shows the pump module 400 containing both the oscillator rod 106 and the amplifier rod 700. In the conventional MOPA configuration, the independently housed pump chambers require a precise alignment which can be difficult and result in a high loss system. This disclosure improves upon that design in that the closeness of the rods allows for the second housing to be replaced by a single turning optic 702 thus allowing for improved alignment and a higher output 704. This system could operate at any discrete lasing wavelength from ultraviolet to infrared. Note FIG. 7 is an illustration of a very simple MOPA. In other configurations, other optics such as Q-switches could be included to optimize operational parameters. A Q-switch is a device that quickly changes the resonator's quality or "Q". In a typical Q-switched laser, the Q is low and the resonator is blocked from lasing during excitation. When the Q is quickly switched to high, the energy stored in the gain media is quickly depleted, resulting in a "giant" pulse with high peak power and a short pulse duration. A Q-switch can increase the peak power of a resonator by many orders or magnitude.

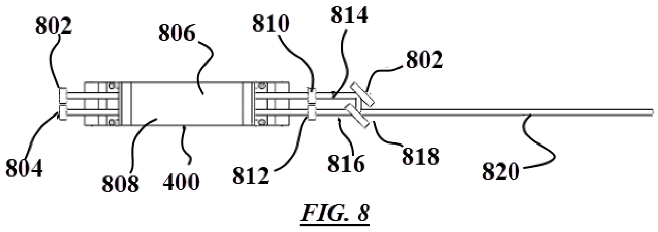

FIG. 8 shows one embodiment of a dichroic beam combiner. A system with compact resonators could be constructed that lases at multiple different wavelengths. For example, a 3-pump chamber version might operate at 1.06, 2.13, and 2.94 µm wavelengths as these are commonly used solid state laser wavelengths, but could be any combination of wavelengths from ultraviolet to infrared wavelengths. The output of the different wavelengths could be combined simultaneously, or a system could switch between wavelengths. The embodiment with regards to this disclosure shows the pump module 400 containing one resonator which includes a highly reflective mirror 802, laser rod 806, a second laser rod 808 that may operate at a different wavelength from laser rod 806, and first output coupler 810 which are optically designed for the first beam output 814 at a specific wavelength. The pump module 400 also contains an additional resonator which includes highly reflective mirror 804, laser rod 808, and second output coupler 812 which are optically designed for the second beam output 816 at a differing wavelength. The beams are then translated by a highly reflective mirror into a beam combiner 818 specifically designed to transmit the second beam output/wavelength 816 and reflect the additional wavelength(s), such as first beam output/wavelength 814 into a beam 820 which is comprised of multiple wavelengths simultaneously.

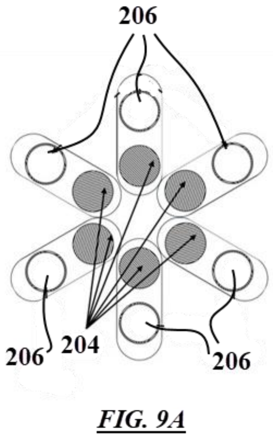

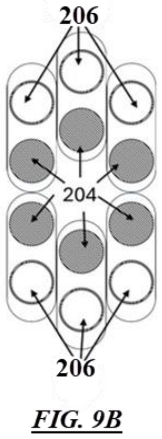

FIGS. 9A and 9B show a further embodiment of the system illustrating a cross section view of a pump module housing six pump chambers. The design shown at FIG. 9A minimizes the distance between the laser rods contained in the single housing. The design shown at FIG. 9B minimizes the housing size. This embodiment shows that the layout of the pump chambers can be oriented in different ways within the pump module as shown at FIGS. 9A and 9B. The positions can be varied so that the rods are optimally close together but can be changed for different packaging and cooling operations.

The current application has many possible applications. For instance, it may be employed with a Ho:YAG laser used for lithotripsy and Benign Prostatic Hyperplasia (BPH). Currently systems are offered with 1, 2, 3, and 4 resonators, each utilizing a separate pump chamber housing. The beams are typically combined using a mechanical device such as a rotating mirror. Using a single module for multiple pump chambers could greatly simplify the design of those systems. Since the beams would be parallel and close to each other, a single lens could be used to focus the output of all the resonators into a fiberoptic with no moving optics. Additionally, the innovation would extend the operational envelope by allowing all resonators to be operated synchronized, significantly increasing the output energy, or asynchronous, significantly increasing the pulse rate frequency. Thus, multiple wavelength resonators may be operated independently, simultaneously, or sequentially.

The current disclosure could also be used with a Ho:YAG/Nd:YAG laser for urological applications. Ho:YAG lases at 2.13 µm and Nd:YAG at 1.06 µm. Since water absorption is very different for the two wavelengths, a system that allowed operation at both wavelengths independently, simultaneously, or sequentially would have additional applications. In addition to Ho:YAG and Nd:YAG, other solid-state wavelengths could be utilized within a singular system

Further, some lasers require redundancy. If multiple lasers were incorporated into a system using the multi pump chamber housing, and one of the lasers failed or degraded, the other resonator(s) could be used as redundant backups. This would be particularly useful for space, some military missions, and to prevent downtime in medical applications.

The disclosure further provides where the optical excitation source and laser gain media or each independent pump are optically isolated from the other independent pump chambers. Optical isolation implies that the light emitted from one excitation source can be incident on, at a minimum, a single laser gain media at a given time. This is unique and beneficial in that there may be instances where different gain media require a different optical excitation parameters, i.e. gas fill, fill pressure, etc. for the highest efficiency performance. The optical excitation source could in one instance be a gas discharge, but may also be a semiconductor, semiconductor laser or other light source. The excitation source and laser gain media are preferably close-coupled for high efficiency. Close-coupling allows for higher efficiency due to the closeness of the excitation source and the gain material, thus allowing for more direct illumination. Further, the optical excitation source may be a pulsed plasma gas discharge with the gas being Xenon, Krypton, or a combination at a pressure of 100 to 3,000 torr. A more commonly used range would be 450-700 Torr. The optical excitation source and laser gain media can be surrounded by a preferably diffuse reflector, but the reflector could also be specular. The diffuse reflector may preferably be BaSO4, but could also be composed of ceramics, textured metal, a polymer such as Spectralon^{™} or other highly reflective diffuse materials. The listed reflector materials have high reflectance through the visible to near infrared wavelength region. These materials are typically used for the optical excitation of solid-state lasers. It is advantageous if the gain media are essentially parallel so that the resultant laser resonator's beams are essentially parallel. This provides for easier beam combination and illumination of a target.

The housing is commonly composed of anodized aluminum, but could also be composed of steel, titanium, plastic, ceramics, or other materials.

The housing, optical excitation source, and laser gain media may be cooled, preferably, by a liquid but could also be cooled by forced gas or conductive means, i.e. moving the heat from the housing to some other object. Typically, the liquid coolant would be pure water but could also be ethylene glycol, propylene glycol, or other liquids. The multiple chamber laser systems of the current disclosure may be configured for beam combining for use with laser sources and laser light including, but not limited to, solid state lasers, diode pumped lasers, semiconductor lasers, fiber lasers or any other laser that is obvious to one skilled in the art. This includes laser systems configured for beam translation for use with laser sources and laser light including, but not limited to, solid state lasers, diode pumped lasers, semiconductor lasers, fiber lasers or any other laser that is obvious to one skilled in the art.

The uses of the systems of the current are very diverse. For instance, the systems may be used as laser medical devices, devices for use with Solid-State laser gain media, for purposes of example only and not intended to be limiting, CTH:YAG, Er:YAG, Nd:YAG, Er:Glass, Ruby, Alexandrite etc. The systems herein may be employed in Urology and Endourology. The systems may be used in beam combining devices for use in Lithotripsy or Benign Prostate Hyperplasia treatments and may include beam combining with multiple wavelengths. The current systems may also be used in telecommunications, laser material processing, laser peening, drilling, and/or welding, space, military, etc., applications. Further, the additional laser resonators may be employed as a backup in case of one resonator failing or degrading another laser could be switched on within the same package. For example, if the power detected in Resonator 1 reached a minimum output, a system would switch to Resonator 2 mechanically, electronically, or by a combination of the above. Further, multiple wavelength resonators may be operated independently, simultaneously or sequentially. Independent operation would occur with each laser operating independently with potentially different timing, pulse parameters, etc. Simultaneous operation would occur when the lasers fire at the same time and would result in a higher energy output, but with the same pulse timing parameters. Sequential operation would result in the same energy output, but a resulting higher average power. If beam combined, the sequential operation would multiply the operating repetition rate by the number of resonators.

Different lasers operate differently, but in brevity, the operation of a typical pulsed solid-state laser starts when the system is initiated. The main energy storage (capacitor) is electrically charged and the flashlamp is ionized with a brief high voltage or RF discharge. A small electrical discharge current (simmer) is maintained through the flashlamp to keep the flashlamp gas ionized. When a laser pulse is desired, a high power switching device connects the energy storage capacitor to the flashlamp so that a high energy discharge in the flashlamp plasma occurs. The power switching device is often an isolated gate bipolar transistor - IGBT. The intense light produced by the plasma in the flashlamp optically excites the laser gain media. When the gain of the laser media exceeds the resonator losses, Light Amplification by Stimulated Emission of Radiation (LASER) starts to occur as a laser beam resonates between the resonator mirrors. At least one of the resonator mirrors is partially reflective and a portion of the resonating laser power is emitted.

Various modifications and variations of the described methods, compositions, and kits of the disclosure will be apparent to those skilled in the art without departing from the scope and spirit of the disclosure. Although the disclosure has been described in connection with specific embodiments, it will be understood that it is capable of further modifications and that the disclosure as claimed should not be unduly limited to such specific embodiments. Indeed, various modifications of the described modes for carrying out the disclosure that are obvious to those skilled in the art are intended to be within the scope of the disclosure. This application is intended to cover any variations, uses, or adaptations of the disclosure following, in general, the principles of the disclosure and including such departures from the present disclosure come within known customary practice within the art to which the disclosure pertains and may be applied to the essential features herein before set forth.

## Claims

1. An improved, compact multiple pump chamber module comprising:
at least two pump chambers contained in a single pump chamber housing, each of the at least two pump chambers having at least one optical excitation source and at least one laser gain media; and
wherein the at least two pump chambers operate independently of one another.

2. The improved, compact multiple pump chamber module of claim 1, wherein the at least one optical excitation source and the at least one laser gain media for each of the at least two pump chambers are optically isolated from one another.

3. The improved, compact multiple pump chamber module of claim 2, wherein the at least one optical excitation source comprises a gas discharge, a semiconductor, semiconductor laser, other light source, or combinations of same.

4. The improved, compact multiple pump chamber module of any of the preceding claims, wherein the at least one excitation source and the at least one laser gain media for at least one pump chamber are close-coupled.

5. The improved, compact multiple pump chamber module of any of the preceding claims, wherein the optical excitation source is a pulsed plasma gas discharge with the gas being Xenon, Krypton, or a combination of Xenon and Krypton, at a pressure of 100 to 3,000 torr.

6. The improved, compact multiple pump chamber module of any of the preceding claims, wherein the at least one optical excitation source and the at least one laser gain media are at least partially surrounded by either a diffuse reflector or a specular reflector, and wherein optionally the diffuse reflector comprises BaSO4, at least one ceramic, at least one textured metal, at least one polymer, or combinations of the above.

7. The improved, compact multiple pump chamber module of any of the preceding claims, wherein the at least one gain media for each pump chamber are substantially parallel to one another.

8. The improved, compact multiple pump chamber module of any of the preceding claims, further comprising at least one housing composed of anodized aluminum, steel, titanium, plastic, ceramic, or combinations of the above.

9. The improved, compact multiple pump chamber module of any of the preceding claims, further comprising at least two flow tubes composed of a transparent or translucent material comprising fused silica, plastic, crystal, transparent ceramic, glass or combinations of the above.

10. The improved, compact multiple pump chamber module of any of the preceding claims, further comprising where the single housing, at least one optical excitation source, and at least one laser gain media are cooled via liquid, forced gas, conductive means, or combinations of the above.

11. The improved, compact multiple pump chamber module of any of the preceding claims, configured for use with laser sources and laser light including solid state lasers, diode pumped lasers, semiconductor lasers, fiber lasers, or combinations of the above.

12. The improved, compact multiple pump chamber module of any of the preceding claims, configured for use with laser medical devices, devices for use with Solid-State laser gain media including CTH:YAG, Er:YAG, Nd:YAG, Er:Glass, Ruby, Alexandrite or combinations of the above, telecommunications devices, laser material processing devices, laser peening, drilling or welding devices, space or military applications, or combinations of the above.

13. The improved, compact multiple pump chamber module of any of the preceding claims, further comprising beam combining with at least two different wavelengths.

14. The improved, compact multiple pump chamber module of any of the preceding claims, further comprising at least a first laser resonator and a second laser resonator wherein either the first or second laser resonator acts as a backup to the other resonator.

15. The improved, compact multiple pump chamber module of any of claims 1 to 13, further comprising multiple wavelength laser resonators operated independently, simultaneously or sequentially with respect to one another.
